# EUROPÄISCHE PATENTSCHRIFT

(11) **EP 2 287 077 B1**
(45) Veröffentlichungstag und Bekanntmachung des Hinweises auf die Patenterteilung: **05.09.2012**
(21) Anmeldenummer: 10006881.6
(22) Anmeldetag: 02.07.2010
(51) Int. Cl.: B65B 7/28, B65B 31/02, B65B 51/22, B29C 65/16

(54) **Lasersiegeln von Verpackungen**
Laser sealing of packages
Scellement par laser d'emballages

(30) Priorität: 13.08.2009 DE 102009037404
(43) Veröffentlichungstag der Anmeldung: 23.02.2011
(73) Patentinhaber: Multivac Sepp Haggenmüller GmbH & Co. KG, 87787 Wolfertschwenden (DE)
(72) Erfinder: Ehrmann, Elmar, 87730 Bad Grönenbach (DE); Slomp, Tieme Jan, 87730 Bad Grönenbach (DE); Maier, Robert, 87727 Babenhausen (DE)
(74) Vertreter: Grünecker, Kinkeldey, Stockmair & Schwanhäusser

(56) Entgegenhaltungen:
- EP-A1- 0 483 569
- EP-A2- 1 908 689
- WO-A1-00/50305
- WO-A1-2010/024189
- DE-U1-202006 014 872
- US-A- 5 049 720

## Beschreibung

Die vorliegende Erfindung bezieht sich auf eine Vorrichtung gemäß dem Oberbegriff von Anspruch 1, insbesondere für eine Verpackungsmaschine, und auf ein Verfahren für eine Verpackungsmaschine gemäß dem Oberbegriff von Anspruch 13.

Aus der DE 19782074 ist bekannt, dass Kunststofffolien zur Herstellung von Packungen oder Beuteln mittels Laser miteinander verschmolzen werden können. Hierbei kann eine absorbierende Folie zum Verschmelzen selbst erwärmt werden oder ein Bauteil erwärmt werden, mit dem wenigstens eine Folie in mechanischem Kontakt steht.

Beim Verpacken von frischen Lebensmitteln für eine möglichst lange Haltbarkeit ist es oft nicht ausreichend, die Verpackung nur luftdicht zu verschließen. Hierbei sind sehr viel höhere Anforderungen an die Atmosphäre in der verschlossenen Verpackung gestellt. Um sehr geringe Restsauerstoffwerte in der Verpackung zu erreichen, muss ein Vakuum beispielsweise von kleiner 10mbar erzeugt werden oder die Verpackung vor dem Verschließen evakuiert und/oder begast werden, vorzugsweise mit Stickstoff und/oder einem Gasgemisch mit Kohlendioxid.

Die DE 19782074 gibt hierzu keinen Hinweis, wie mittels Laser Packungen mit modifizierter Atmosphäre hergestellt beziehungsweise versiegelt werden könnten.

Üblicherweise werden Verpackungen mit modifizierter Atmosphäre beispielsweise auf Tiefziehverpackungsmaschinen in der Siegelstation durch eine geschlossene Kammer evakuiert und/oder begast und mittels einer dauerhaft erwärmten Siegelplatte die Folien zusammengepresst und miteinander zu einer ringsum geschlossenen Siegelnaht verschmolzen. Hierbei ist ein hoher Energieaufwand notwendig, die Siegelplatte dauerhaft auf der benötigten Temperatur aufgeheizt zu halten, und bei Umrüstvorgängen ist eine entsprechend zur Abkühlung notwendige Abkühlzeit abzuwarten.

Die gattungsgemäße US 5,049,720 A beschreibt ein optisches System mit Laser zum hermetischen Versiegeln eines Deckels auf einem Container. Dabei werden Laserstrahlen mittels vorhandener Spiegelanordnung durch einen Fensterbereich einer Klemmplatte auf die Stelle geleitet, wo die hermetisch abdichtende Siegelnaht entstehen soll. Der Container ist aus lichtundurchlässigem Material hergestellt, welches die Energie der Laserstrahlen absorbiert, wodurch im Material Hitze entsteht, und dadurch der Container mit dem Deckel verschmilzt. Nachteilig daran ist, dass der Siegelprozess vom lichtundurchlässigen Material des Containerrandes abhängig ist, was die Materialverwendungsmöglichkeiten einschränkt.

Die DE 20 2006 014 872 U1 beschreibt eine Vorrichtung zum Verschweißen von mindestens zwei übereinander liegenden Folien. Dabei werden die beiden Folien zwischen einer ersten hohlen Pressrolle und einer zweiten Pressrolle zusammengeführt, um zwischen den Rollen verschweißt zu werden. Zum Verschweißen umfasst die Vorrichtung eine Schweißeinrichtung, die innerhalb der ersten hohlen Pressrolle angeordnet ist. Von der Schweißeinrichtung geht eine Laserstrahlung durch die semitransparente Außenwand der ersten Pressrolle hindurch und wird dann in einem Spalt zwischen den beiden Pressrollen hin und her reflektiert, sodass sich die Folien zum Verschweißen ausreichend erhitzen. Nachteilig daran ist, dass die im Pressspalt durch das hin und her reflektieren der Laserstrahlung erzeugte Hitze schwer regelbar ist, wodurch es zum Verbrennen des zu versiegelnden Materials der Folien kommen kann.

Die WO 00/50305 A1 beschreibt ein Verfahren zum hermetischen Versiegeln eines Deckels mit einem Container, welcher ein Lebensmittelprodukt beinhaltet. Dabei kann in den Behälter vor dem Versiegeln durch ein vorgesehenes Gas eine bestimmte Atmosphäre geschaffen werden, um das Lebensmittelprodukt länger haltbar zu machen. Zum Versiegeln wird durch eine erhitzte Schweißplatte der Deckel auf den Container gepresst.

Die EP 0 483 569 A1 betrifft eine Vorrichtung und ein Verfahren zum vakuumdichten Versiegeln eines Behälters. Dabei wird ein Laserstrahl auf einen Deckel gerichtet, der auf einem Rand eines Behälters liegt. Dadurch wird der Deckel und der Behälter derart erhitzt, dass beide entlang einer Siegelnaht verschweißt werden.

Es ist nun die Aufgabe der vorliegenden Erfindung, eine Vorrichtung für eine Verpackungsmaschine zu entwickeln, die Verpackungen energieeffizienter unter modifizierter Atmosphäre herstellen kann und somit zugleich den hohen Anforderungen im Lebensmittelbereich genügt und den hohen Leistungsanforderungen einer Verpackungsmaschine in einem hochautomatisierten Umfeld gewachsen ist. Insbesondere liegt der Erfindung die Aufgabe zugrunde, eine Vorrichtung mittels einfacher, konstruktiver technischer Merkmale zu schaffen, wobei die Vorrichtung derart ausgebildet ist, dass sie eine große Vielfalt von Verpackungsmaterialien miteinander verbinden kann.

Diese Aufgabe wird durch die Lehre von Anspruch 1 oder 13 gelöst, wobei statt einer aufgeheizten Siegelplatte ein Laser die Funktion der Verschmelzung der Folien in einer Umgebung mit modifizierter Atmosphäre übernimmt. Die Erfindung zeichnet sich dadurch aus, dass die Klemmeinrichtung für die Folien eine Doppelfunktion erhält: Sie dient nicht nur zum Klemmen der Folien, sondern auch zum Heranführen der Laserstrahlung an die Siegelnaht.

Der Laser erwärmt dabei ein Siegelprofil, das Absorptionseigenschaft beim Vorgang des Schmelzens durch die Klemmplatte an einer Seite der Folien im Bereich der Siegelnaht anliegt oder selbst Teil der Klemmplatte ist. Dieses kann auf der gegenüberliegenden Seite der Folien zur Laserstrahlung liegen, dann geht die Laserstrahlung durch die Folien hindurch, um das Siegelprofil, beispielsweise Metall, zu erwärmen.

Das Siegelprofil, das auch Teil des Siegelwerkzeugunterteils oder eine Komponente davon oder Teil der Klemmplatte oder eine Komponente davon sein kann, absorbiert im Bereich der zu erzeugenden Siegelnaht die Laserstrahlung und wird dadurch erwärmt, um die erzeugte Wärme dann auf die anliegenden Folien zu übertragen. In diesem Fall kann ein energetisch günstiger gepulster Laser eingesetzt werden, da eine Wärmestreuung bzw. -verteilung in dem Siegelprofil stattfindet.

Um Verpackungen mit einer modifizierter Atmosphäre herstellen zu können, ist es notwendig in einer Siegelstation vorzugsweise durch ein Werkzeugoberteil und Werkzeugunterteil durch Klemmen einer Deckelfolie mit einer Unterfolie oder einer Schale ringsum so zu verschließen, dass eine hermetisch abgeschlossene Kammer entsteht. Die Atmosphäre in Verpackungen kann unter die Voraussetzung einer geschlossenen Kammer durch die Veränderung der Atmosphäre in der Kammer gezielt angepasst werden. Nachdem die gewünschte Atmosphäre erreicht ist, klemmt eine Klemmplatte die Deckelfolie und Unterfolie oder Schale gegen das Werkzeugunterteil, vor allem in dem Bereich einer zu erzeugenden Siegelnaht, damit beim Erwärmen die Deckelfolie mit der Unterfolie oder Schale sicher in Kontakt steht und durch einen hohen Anpressdruck eine etwas niedrigere Erwärmung ein gewünschtes Verschmelzen der Folien miteinander erreicht werden kann und die Folien gleichzeitig sicher solange gehalten werden, bis die Siegelnaht abgekühlt ist und die Packung bis zum Öffnen der Kammer sicher geschlossen ist. Diese Siegelung muss nahe einem Packungsrand umlaufend und durchgehend erfolgen, um eine hermetisch verschlossene Verpackung mit einer evakuierten und/oder modifizierten Atmosphäre herstellen zu können. Um einen Laser zur Folienerwärmung einsetzen zu können, müssen zwei Voraussetzungen geschaffen werden. Zum Einen sollte das Material der Klemmplatte wenig oder am besten nicht absorbierend sein, um möglichst die gesamte Energie der Laserstrahlung zum Arbeitsort bringen zu können. Dies ist vorzugsweise durch einen transparenten Kunststoff oder Glas realisiert. Zum Zweiten sollten die Folien zumindest im Bereich der Siegelnaht die Eigenschaft besitzen, sich direkt oder indirekt durch Laserstrahlen erwärmen zu können, beispielsweise absorbierend zu wirken. Dies kann durch dunkle Einfärbung oder aufgebrachte, sowie in der Deckel- und/oder Unterfolie oder Schale bereits vorhandene, Partikel mit für eine entsprechende Laserstrahlung absorbierenden Eigenschaft umgesetzt sein.

Bei der Absorption der Laserstrahlen durch die Folie, erwärmen sich diese. Hierbei ist entscheidend, welche Laserart (Festkörperlaser, Gaslaser, Halbleiterlaser und weitere) beziehungsweise welcher Lasertyp (z.B. Nd:YAG-Laser, CO₂-Laser) verwendet werden und welche Strahlenintensität und/oder Strahlungsform eingestellt wird. Entscheidend ist auch die Absorptionseigenschaft der Folie bzw. der Partikel in den Folien oder Beschichtungen, die dies bewirken können.

Eine Laserquelle befindet sich vorzugsweise außerhalb der Siegelstation und die Laserstrahlen gelangen durch einen nicht absorbierenden Bereich des Siegelwerkzeugoberteiles in das Innere der Kammer und somit auch durch die Klemmplatte hindurch zu den Folien. Durch diese Ausführung wird das Problem gelöst, mit den Laserstrahlen durch eine geschlossene Kammer an den Ort des Verschmelzens zu gelangen und gleichzeitig auch die Folien für eine hohe Prozesssicherheit und damit wiederholende Qualität der Siegelnaht zueinander angedrückt zu halten.

Das Einspannen der Folien durch das Siegelwerkzeugoberteil und Siegelwerkzeugunterteil erfolgt möglichst weit außen, um der Deckelfolie im Inneren der Kammer die Möglichkeit zu geben, nach oben angehoben zu werden, beispielsweise durch Druckunterschiede oberhalb und unterhalb der Deckelfolie oder mechanisch durch Begasungsdüsen im Werkzeugunterteil. Dies führt zu einem schnellen und effektiven Austausch der Atmosphäre in diesem Bereich, vorzugsweise durch Evakuieren und Wiederbegasen mit einem Gasgemisch von Stickstoff und Kohlendioxid. Somit wird mit einem sehr geringen Restsauerstoffgehalt in der Verpackung eine besonders lange Haltbarkeit vor allem bei Fleisch und Wurst erreicht.

Die Laserstrahlung folgt dem Verlauf der zu erzeugenden Siegelnaht und verschmilzt dabei die Folien miteinander. Hierzu wird ein optisches System, aus dem die Laserstrahlung austritt, so gesteuert, dass die die von der Laserstrahlung erfasste Kontur entsprechend einem geforderten Bahnverlauf anpassbar ist.

Vorteil bei einer x-y-Verfahreinheit für das optische System ist eine sehr hohe Bahngenauigkeit und ein gleichbleibender Abstand vom Strahlungsaustritt zu Folie. Ebenso ist eine maximale Flexibilität gegeben, um alle herstellbaren und unterschiedlichen Verpackungsformen und damit definierten Siegelnahtverläufe und Schnittkanten beim Schneiden mittels Laser ausführen zu können.

Bei Anwendungen mit einer kleinen benötigten Fläche der Siegelnähte ist ein Scanner zum Ausrichten die platzsparendste und günstigste Lösung.

Durch die frei erzeugbaren Siegelnahtverläufe ist es sinnvoll, diese in einer Steuerung in einem Speicher abzulegen, um sie dann wieder zum Produktionsbeginn einer Charge nach dem Wechseln einer Verpackungsform sofort und ohne weitere Umrüstarbeiten für den Laser zur Verfügung stehend und ausführbar zu haben.

Eine geeignete Laserform ist der Diodenlaser, da hierbei die Strahlung über Lichtleiterkabel flexibel geleitet werden kann.

Die Anwendung ist bevorzugt an der Siegelstation von Tiefziehverpackungsmaschinen oder Schalenverschließmaschinen einsetzbar.

Bei einem besonders geeigneten Ablauf eines Verfahrens für eine Verpackungsmaschine, bei dem mehrere Folien mittels Laserstrahlung in einer Siegelstation im Bereich der Siegelnaht verschweißt werden sollen, werden in einem ersten Arbeitsschritt die Folien durch das Siegelwerkzeugoberteil und Siegelwerkzeugunterteil ringsum eingespannt. Anschließend werden die Folien zueinander beabstandet, damit beim folgenden oder gleichzeitigen Evakuieren und/oder Begasen die Atmosphäre wie vorgegeben schnell und prozesssicher modifiziert wird. Nach Erreichen der gewünschten Atmosphäre drückt die Klemmplatte die Folien im Bereich der Siegelnaht gegen das Siegelwerkzeugunterteil, und die Laserstrahlung verschweißt die Folien durch Erwärmung derselben in diesem Bereich, indem ein Siegelprofil zum Verschweißen der Folien mittels Laser erwärmt wird.

Die Laserstrahlung kann von außen durch das Siegelwerkzeugoberteil oder Siegelwerkzeugunterteil zu den Folien gelangen, indem dieser Bereich durch nicht absorbierende Materialien für die Laserstrahlen zugänglich gemacht wird.

Die Laserstrahlen können sowohl von oben und/oder unten an die Folien und zu erwärmenden Komponenten gelangen, ebenso ist es auch denkbar, dass sich die Einheit zum Verändern der Lage der Laserstrahlung bereits im Inneren der Kammer befindet.

Im Anschluss an den Siegelungsprozess kann der Laser entsprechend mit angepassten Leistungs- und Einstellungsparametern beide Folien außerhalb der erzeugten Siegelnaht durchtrennen, um vereinzelte Packungen zu erzeugen. Hierbei bedarf es seines angepassten Packungstransportes der einzelnen Packungen aus der Siegelstation, oder die Schneidung erfolgt nicht komplett, indem wenige kleine Verbindungsstege zwischen den Packungen und einer Folie bestehen bleiben und die Packungen erst in einer weiteren, der Siegelstation nachgeordneten Arbeitsstation aus der (Unter-)folie entfernt werden.

Im Folgenden werden vorteilhafte Ausführungsbeispiele der Erfindung anhand einer Zeichnung näher erläutert. Im Einzelnen zeigen:
- Figur 1:: eine schematische Schnittansicht einer erfindungsgemäßen Vorrichtung in Produktionsrichtung in einer Form einer Siegelstation,
- Figur 2:: eine schematische Schnittansicht wie in Figur 1 mit geschlossener Kam- mer,
- Figur 3:: eine schematische Schnittansicht wie in Figur 2 mit einer Klemmplatte und Laserstrahlung in Funktion,
- Figur 4:: eine Draufsicht auf eine Packung mit Siegelnaht,
- Figur 5:: eine schematische Schnittansicht wie Figur 3 in einer Variante, und
- Figur 6:: eine schematische Schnittansicht wie Figur 3 in einer Variante mit einem Klemmrahmen unten.

Gleiche Komponenten werden in den Figuren durchgängig mit gleichen Bezugszeichen versehen.

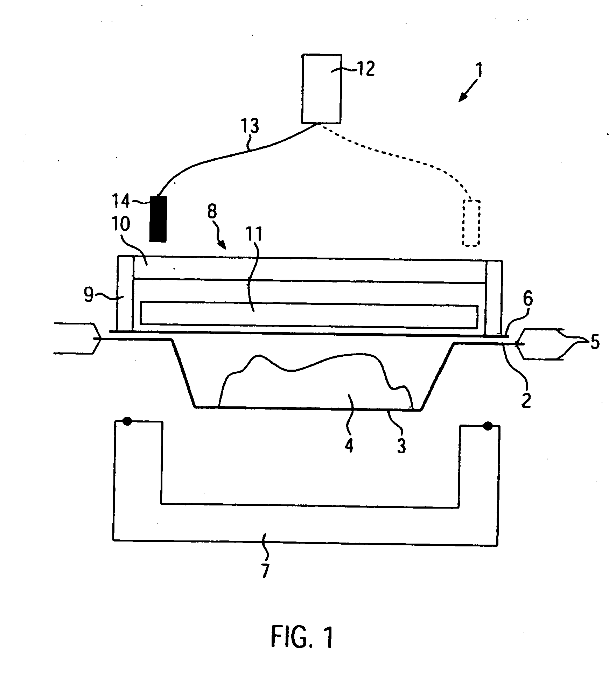

Figur 1 zeigt eine Siegelstation 1 einer Tiefziehverpackungsmaschine in Produktionsrichtung mit einer Unterfolie 2, in die eine Mulde 3 in einer nicht dargestellten Formstation zuvor geformt wurde und anschließend ein Produkt 4 eingelegt wurde. Die Unterfolie 2 wird intermittierend durch eine Klammerkette 5 transportiert, die die Unterfolie 2 seitlich hält.

In der Siegelstation 1 ist bereits eine Deckelfolie 6 zugeführt. Die Siegelstation 1 selbst umfasst ein Siegelwerkzeugunterteil 7, das durch ein nicht dargestelltes Hubwerk auf und ab bewegt werden kann. Das Siegelwerkzeugoberteil 8 umfasst einen Rahmen 9 und ein nicht absorbierendes Fenster 10. Im Inneren des Siegelwerkzeugoberteils 8 befindet sich noch eine nicht absorbierende Klemmplatte 11. Über der Siegelstation 1 befindet sich eine Laserquelle 12, von der ein Laserstrahl mittels Lichtleiterkabel 13 und optischem System 14 durch das Siegelwerkzeugoberteil 8 zu den Folien 2 und 6 gelangen kann. Das optische System 14 kann zur Einstellung und Ausrichtung der Strahlungsform ausgeführt sein.

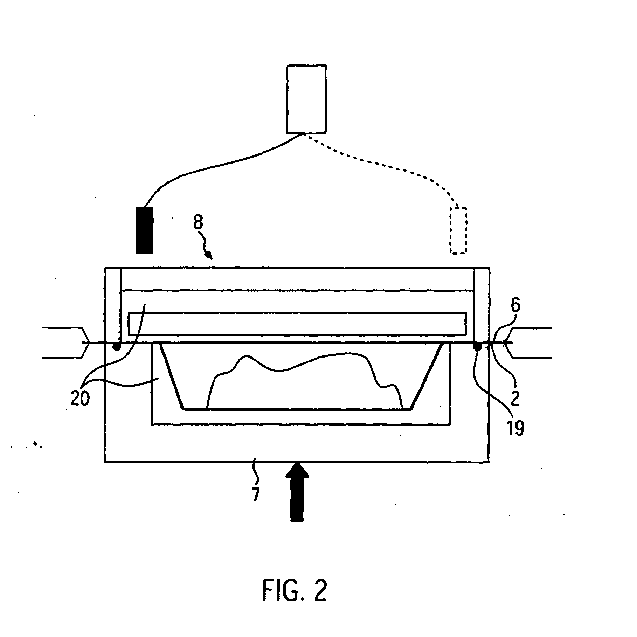

In Figur 2 wurde das Siegelwerkzeugunterteil 7 nach oben bis an das Siegelwerkzeugoberteil 8 bewegt und die Deckelfolie 6 und Unterfolie 2 dabei zwischen dem Siegelwerkzeugoberteil 8 und Siegelwerkzeugunterteil 7 ringsum über die Dichtung 19 eingeklemmt und eine hermetisch geschlossene Kammer 20 gebildet.

Anschließend kann der Vorgang zum Evakuieren der Kammer 20 und somit auch des Packungsinneren erfolgen. Dies wird durch nicht dargestellte Bohrungen bzw. Abluftleitungen über das Siegelwerkzeugunterteil 7 realisiert. Um eine modifizierte Atmosphäre zu erhalten, kann gleichzeitig oder danach ein Gas oder Gasgemisch, vorzugsweise Stickstoff und Kohlendioxid, über nicht dargestellte Gasdüsen zugeführt werden, um einen möglichst geringen Restsauerstoffgehalt im Packungsinneren zu erreichen.

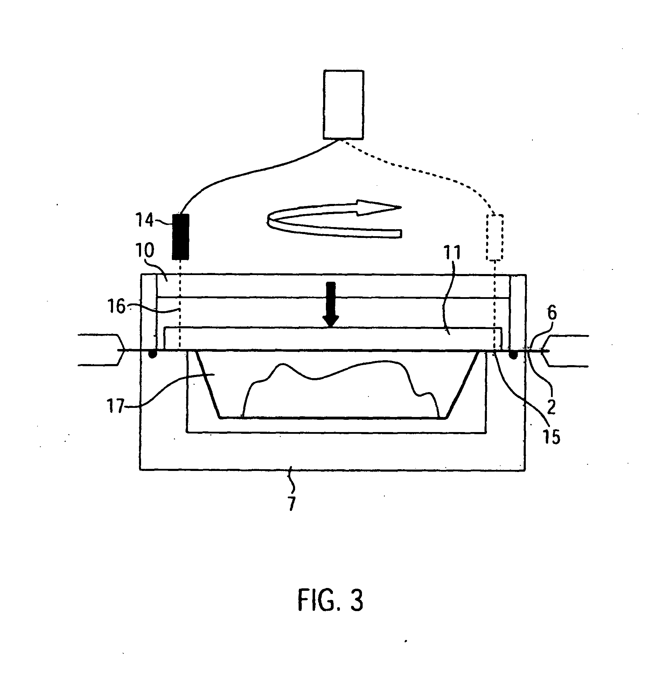

Ist der Austausch der Atmosphäre abgeschlossen, wird die Klemmplatte 11, wie in Figur 3 dargestellt, gegen das Siegelwerkzeugunterteil 7 positioniert. Dabei drückt sie wenigstens im Bereich der noch zu erzeugenden Siegelnaht 15 die Deckelfolie 6 mit der Unterfolie 2 gegen das Siegelwerkzeugunterteil 7.

Der Laserstrahl 16 gelangt nun für den Verschweißprozess von außen durch das Fenster 10 im Siegelwerkzeugoberteil 8 und durch die Klemmplatte 11 zu den Folien 2 und 6, um diese im zusammengedrückten Zustand im Bereich der Siegelnaht 15 zu erwärmen. Dabei wird ein Siegelprofil zum Verschweißen der Folien 2 und 6 mittel Laser erwärnt. beider Folien 2 und 6 kommt. Die Siegelnaht 15 besitzt anschließend sowohl die Eigenschaft der hermetischen Versiegelung der Packung 17, als auch die Eigenschaft, so lösbar zu sein, dass sich die Deckelfolie 6 durch Ziehen von der Unterfolie 2 abziehen lässt, um das Produkt 4 aus der Packung 17 entnehmen zu können.

Dabei wird das optische System 14 oberhalb der Siegelstation 1 entsprechend der zu erzeugenden Siegelnaht 15 verfahren, um pro Packung eine in sich geschlossene Siegelnaht 15 erzeugen zu können.

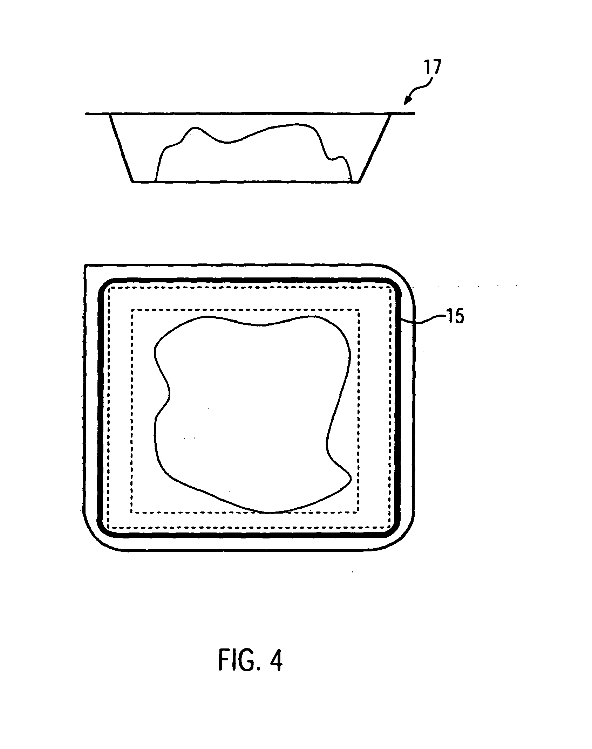

Figur 4 zeigt als Ergebnis eine Draufsicht auf eine fertige Packung 17 mit einer geschlossenen Siegelnaht 15, die in einer in der Produktionsrichtung folgenden, aber nicht dargestellten Schneidstation aus dem Folienverbund vereinzelt wurde.

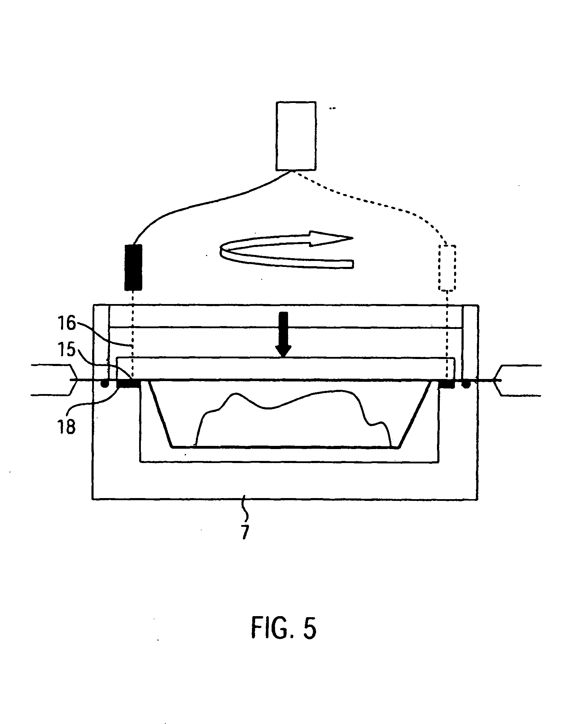

Die erfindungsgemäße Vorrichtung ist in Figur 5 dargestellt. Dabei werden durch den Laserstrahl 16 nicht die Folien selbst erwärmt, sondern ein geeigneter absorbierender Abschnitt oder Einsatz 18 im Siegelwerkzeugunterteil 7 erwärmt, um damit die notwendige Wärme im Bereich der Siegelnaht 15 für den Verschmelzungsprozess zu erzeugen.

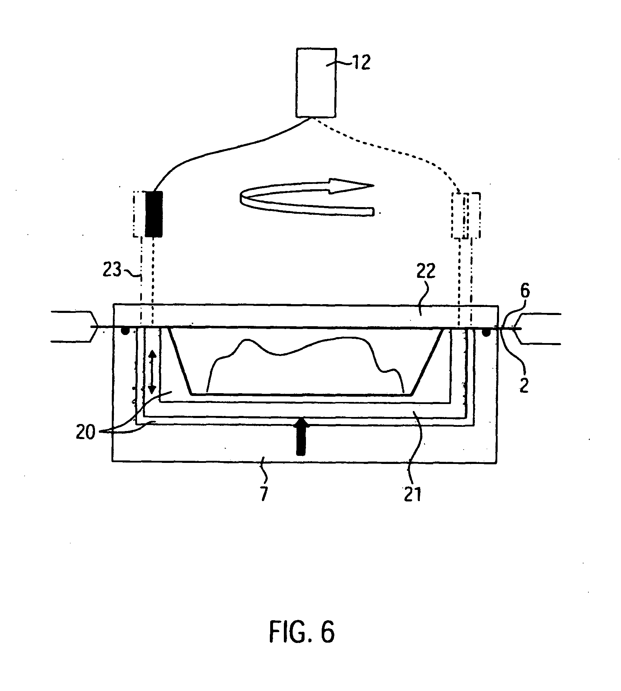

Figur 6 zeigt eine Variante, bei der das Siegelwerkzeugoberteil als für die Laserstrahlung transparenter Glasdeckel 22 ausgeführt ist und dieser mit dem Siegelwerkzeugunterteil 7 eine Kammer 20 bildet. Zum Erzeugen der Siegelnaht wird ein Klemmrahmen 21 inner-halb des Siegelwerkzeugunterteils 7 an den Glasdeckel 22 bewegt und dabei die zwei Folien 2, 6 zusammengepresst. Der Klemmrahmen 21 oder nur der Teil, der an der Folie 2 anliegt, sind absorbierend ausgeführt . In Figur 6 deutet der Doppelpfeil an, dass der Klemmrahmen 21 innerhalb des Siegelwerkzeugunterteils 7 nach oben und unten verfahren werden kann, um die Folien 2, 6 festzuklemmen beziehungsweise freizugeben. Der stärker ausgeführte Pfeil deutet an, dass auf den Klemmrahmen 21 zusätzlich ein nach oben gerichteter Druck ausgeübt werden kann, der an die Folien 2, 6 weitergegeben wird, so dass die Folien 2, 6 dicht aneinander anliegen.

Als weitere nicht dargestellte Ausführungen wäre es denkbar, auch den Einsatz 18 als Teil der Klemmplatte 11 auszuführen oder sowohl den Einsatz 18, als auch die Folien 2 und 6 durch den Laserstrahl 16 erwärmbar auszuführen.

Ebenso kann die Variante mit Laserquelle 12, dem Lichtleiterkabel 13 und dem optischen System 14 beispielsweise durch einen (CO₂-) Laser ersetzt werden, dessen durch eine x-y-Verfahreinheit über dem Siegelwerkzeugoberteil entlang einer Bahn verfahren wird, um eine geschlossene Siegelnaht zu erzeugen.

Statt in dem Siegelwerkzeugoberteil 8 ein transparentes Fenster 10 vorzusehen, könnte auch das ganze Siegelwerkzeugoberteil 8 transparent sein.

Im Ausführungsbeispiel nach Figur 6 wird ein erster Laserstrahl zum Versiegeln der Folien 2, 6 verwendet, während ein zweiter Laserstrahl 23 dazu verwendet wird, die Folien 2, 6 außerhalb der Siegelnaht 15 zumindest abschnittsweise zu durchtrennen, gegebenenfalls aber die Verpackung auch vollständig aus den restlichen Folien 2, 6 herauszuschneiden. Bei dem Laserstrahl 23 zum Schneiden kann es sich um den Strahl eines anderen Lasers handeln, oder aber um den Strahl desselben Lasers 12, der auch zum Siegeln verwendet wird. Figur 6 zeigt, dass der Laserstrahl 23 die Folien 2, 6 an einer Stelle außerhalb der Siegelnaht trifft. Insbesondere trifft er die Folien 2, 6 an einer Stelle, an der die Unterseite der Folien nicht mehr auf dem Klemmrahmen 21 liegt, sondern zur Kammer 20 hin freiliegt. Dies ermöglicht die Aufnahme des durch das Laserschneiden verdampften Materials der Folien 2, 6 in der Kammer 20.

Beim Auftreffen auf die Folien 2, 6 ist die Intensität des zum Schneiden verwendeten Laserstrahls 23 deutlich höher als die Intensität des zum Versiegeln verwendeten Laserstrahl 16. Dies kann bei Verwendung desselben Lasers 12 entweder durch Erhöhen der Laserleistung erreicht werden, vorzugsweise jedoch über eine stärkere Fokussierung der Laserstrahlung 23 im Vergleich zur Laserstrahlung 16.

## Patentansprüche

1. Vorrichtung (1) zum Verschweißen von mehreren Folien (2, 6) mittels Laser (12) für eine Verpackungsmaschine, wobei die Vorrichtung (1) eine Klemmeinrichtung (11) aufweist, die sowohl zum Andrücken mehrerer Folien (2, 6) in einem vorgesehenen Bereich, als auch zum Heranführen der zum Verschweißen verwendeten Laserstrahlung (16) an diesen Bereich ausgebildet ist,
**dadurch gekennzeichnet,**
**dass** die Vorrichtung (1) dazu vorgesehen ist, ein Siegelprofil der Vorrichtung (1) zum Verschweißen der Folien mittels Laser (12) zu erwärmen.

2. Vorrichtung nach einem der vorherigen Ansprüche, **dadurch gekennzeichnet, dass** der Laserstrahl (16) von außen durch einen nicht absorbierenden Bereich (10) der Vorrichtung (1) zu den Folien (2, 6) geführt ist.

3. Vorrichtung nach einem Anspruch 2, **dadurch gekennzeichnet, dass** der nicht absorbierende Bereich (10) transparent ausgeführt ist.

4. Vorrichtung nach einem der vorherigen Ansprüche, **dadurch gekennzeichnet, dass** die Vorrichtung (1) dafür vorgesehen ist, die Folien (2, 6) ringsum einzuspannen, eine Kammer zu bilden und während der Erzeugung von Vakuum und/oder modifizierter Atmosphäre zueinander zu beabstanden.

5. Vorrichtung nach einem der vorherigen Ansprüche, **dadurch gekennzeichnet, dass** ein optisches System (14) zum gezielten Verändern der Ausrichtung der Laserstrahlung (16) vorgesehen ist.

6. Vorrichtung nach Anspruch 5, **dadurch gekennzeichnet, dass** das optische System (14) eine kraftbetätigte Einrichtung aufweist, insbesondere eine x-y-Verfahreinheit.

7. Vorrichtung nach Anspruch 6, **dadurch gekennzeichnet, dass** die kraftbetätigte Einrichtung ein Scanner mit verstellbaren Spiegeln ist.

8. Vorrichtung nach Anspruch 7 oder 8, **dadurch gekennzeichnet, dass** die kraftbetätigte Einrichtung mit einer Steuerung verbunden ist und in der Steuerung die Position der Siegelnaht (15) als Programm hinterlegt ist.

9. Vorrichtung nach einem der vorherigen Ansprüche, **dadurch gekennzeichnet, dass** der Laser (12) ein Diodenlaser ist.

10. Vorrichtung nach einem der vorherigen Ansprüche, **dadurch gekennzeichnet, dass** die Vorrichtung (1) eine Siegelstation ist.

11. Vorrichtung nach einem der vorherigen Ansprüche, **dadurch gekennzeichnet, dass** ein Laser (12) zum Durchtrennen wenigstens der Deckelfolie (6) außerhalb der Siegelnaht (15) vorgesehen ist.

12. Vorrichtung nach einem der vorherigen Ansprüche, **dadurch gekennzeichnet, dass** sie Teil einer Tiefziehverpackungsmaschine oder einer Schalenverschließmaschine ist.

13. Verfahren für eine Verpackungsmaschine zum Verschweißen mehrerer folien (2, 6) mittels Laser (12) in einer Siegelstation (1) mit folgenden aufeinander folgenden Schritten:
- Einspannen mehrerer Folien (2, 6) in der Siegelstation (1) ringsum und Schließen einer Kammer (20),
- Beabstanden der Folien zueinander,
- Evakuieren und/oder Begasen des Inneren der Siegelstation (1),
- Zusammenpressen der Folien durch eine Einrichtung (11) im Bereich der Siegelnaht (15), und Verschweißen der Folien (2, 6) entlang der Siegelnaht (15) miteinander mittels Strahlung (16) eines Lasers (12), indem die Siegelstation (1) ein Siegelprofil zum Verschweißen der Folien (2, 6) mittels Laser (12) erwärmt.

14. Verfahren nach Anspruch 13, **dadurch gekennzeichnet, dass** die Einrichtung (11) zum Klemmen der Folien (2, 6) durch die Laserstrahlung (16) erwärmt wird.

15. Verfahren nach Anspruch 13 oder 14, **dadurch gekennzeichnet, dass** der Laser (12) beim Verschweißen von außen durch einen nicht absorbierenden Bereich (10) der Siegelstation (1) zu den Folien (2, 6) oder Klemmeinrichtung (11) geführt wird.

16. Verfahren nach einem der Ansprüche 13 bis 15, **dadurch gekennzeichnet, dass** ein Laser vor Öffnen der Kammer (20) die Deckelfolie (6) und/oder Unterfolie (2) wenigstens zum Teil durchtrennt.

## Claims

1. A device (1) for welding a plurality of films (2, 6) by laser (12) for a packaging machine, the device (1) comprising a clamping apparatus (11), which is provided both for applying pressure to a plurality of films (2, 6) in a given region and for guiding the laser radiation (16) used for welding to this region,
**characterised in that**
the device (1) is provided for heating a sealing profile of the device (1) for welding the films by laser (12).

2. A device according to any one of the preceding claims, **characterised in that** the laser beam (16) passes from outside through a non-absorbing region (10) of the device (1) to the films (2, 6).

3. A device according to claim 2, **characterised in that** the non-absorbing region (10) is transparent.

4. A device according to any one of the preceding claims, **characterised in that** the device (1) is provided for clamping all around the films (2, 6), forming a chamber and spacing them relative to one another during production of a vacuum and/or modified atmosphere.

5. A device according to any one of the preceding claims, **characterised in that** an optical system (14) is provided for purposeful modification of the orientation of the laser radiation (16).

6. A device according to claim 5, **characterised in that** the optical system (14) comprises a powered apparatus, in particular an x-y positioning unit.

7. A device according to claim 6, **characterised in that** the powered apparatus is a scanner with adjustable mirrors.

8. A device according to claim 7 or claim 8, **characterised in that** the powered apparatus is connected to a controller and the position of the seal seam (15) is saved as a program in the controller.

9. A device according to any one of the preceding claims, **characterised in that** the laser (12) is a diode laser.

10. A device according to any one of the preceding claims, **characterised in that** the device (1) is a sealing station.

11. A device according to any one of the preceding claims, **characterised in that** a laser (12) is provided for severing at least the lidding film (6) outside the seal seam (15).

12. A device according to any one of the preceding claims, **characterised in that** it is part of a thermoforming packaging machine or a tray sealer.

13. A method for a packaging machine for welding a plurality of films (2, 6) by laser (12) in a sealing station (1), having the following successive steps:
- clamping all around a plurality of films (2, 6) in the sealing station (1) and closing a chamber (20),
- spacing the films relative to one another,
- applying a vacuum to and/or introducing a gas into the interior of the sealing station (1),
- pressing the films together by means of an apparatus (11) in the region of the seal seam (15), and welding the films (2, 6) together along the seal seam (15) by means of radiation (16) from a laser (12), the sealing station (1) heating a sealing profile for welding the films (2, 6) by laser (12).

14. A method according to claim 13, **characterised in that** the apparatus (11) for clamping the films (2, 6) is heated by the laser radiation (16).

15. A method according to claim 13 or claim 14, **characterised in that**, during welding, the laser (12) passes from outside through a non-absorbing region (10) of the sealing station (1) to the films (2, 6) or clamping apparatus (11).

16. A method according to any one of claims 13 to 15, **characterised in that**, prior to opening of the chamber (20), a laser severs the lidding film (6) and/or bottom film (2) at least partially.

## Revendications

1. Dispositif (1) pour souder ensemble plusieurs films (2, 6) à l'aide d'un laser (12) pour une machine d'emballage, étant précisé que le dispositif (1) comporte un dispositif de serrage (11) qui est conçu à la fois pour presser plusieurs films (2, 6) dans une zone prévue, et pour amener dans cette zone le rayonnement laser (16) utilisé pour le soudage,
**caractérisé en ce que** le dispositif (1) est prévu pour chauffer un profilé de scellage du dispositif (1) en vue de souder ensemble les films à l'aide du laser (12).

2. Dispositif selon l'une des revendications précédentes, **caractérisé en ce que** le rayon laser (16) est amené sur les films (2, 6) de l'extérieur, à travers une zone non absorbante (10) du dispositif (1).

3. Dispositif selon la revendication 2, **caractérisé en ce que** la zone non absorbante (10) est transparente.

4. Dispositif selon l'une des revendications précédentes, **caractérisé en ce que** le dispositif (1) est prévu pour serrer les films (2, 6) sur tout le tour, pour former une chambre et pour espacer les films l'un de l'autre pendant la production d'un vide et/ou d'une atmosphère modifiée.

5. Dispositif selon l'une des revendications précédentes, **caractérisé en ce qu'**il est prévu un système optique (14) pour modifier de manière ciblée l'orientation du rayonnement laser (16).

6. Dispositif selon la revendication 5, **caractérisé en ce que** le système optique (14) comporte un dispositif actionné par une force, en particulier une unité de déplacement x-y.

7. Dispositif selon la revendication 6, **caractérisé en ce que** le dispositif actionné par une force est constitué par un scanner pourvu de miroirs réglables.

8. Dispositif selon la revendication 7 ou 8, **caractérisé en ce que** le dispositif actionné par une force est relié à une commande, et la position du joint scellé (15) est déposée sous la forme d'un programme dans la commande.

9. Dispositif selon l'une des revendications précédentes, **caractérisé en ce que** le laser (12) est un laser à diodes.

10. Dispositif selon l'une des revendications précédentes, **caractérisé en ce que** le dispositif (1) est une station de scellage.

11. Dispositif selon l'une des revendications précédentes, **caractérisé en ce qu'**il est prévu un laser (12) pour séparer au moins le film de couvercle (6) à l'extérieur du joint scellé (15).

12. Dispositif selon l'une des revendications précédentes, **caractérisé en ce qu'**il fait partie d'une thermoformeuse ou d'une operculeuse.

13. Procédé pour une machine d'emballage pour souder ensemble plusieurs films (2, 6) à l'aide d'un laser (12) dans une station de scellage (1), avec les étapes successives qui consistent :
- à serrer plusieurs films (2, 6), sur tout le tour, dans la station de scellage (1) et à fermer une chambre (20),
- à espacer les films l'un de l'autre,
- à évacuer et/ou exposer à un gaz l'intérieur de la station de scellage (1),
- à presser ensemble les films à l'aide d'un dispositif (11) dans la zone du joint scellé (15), et à souder ensemble les films (2, 6) le long du joint scellé (15) à l'aide du rayonnement (16) d'un laser (12), grâce au fait que la station de scellage (1) chauffe un profilé de scellage pour souder ensemble les films (2, 6) à l'aide du laser (12).

14. Procédé selon la revendication 13, **caractérisé en ce que** le dispositif (11) est chauffé à l'aide du rayonnement laser (16) pour serrer les films (2, 6).

15. Procédé selon la revendication 13 ou 14, **caractérisé en ce que** le laser (12), lors du soudage, est amené sur les films (2, 6) ou sur le dispositif de serrage (11) de l'extérieur, à travers une zone non absorbante (10) de la station de scellage (1).

16. Procédé selon l'une des revendications 13 à 15, **caractérisé en ce qu'**un laser sépare au moins en partie le film de couvercle (6) et/ou le film inférieur (2) avant l'ouverture de la chambre (20).
